# EUROPÄISCHE PATENTSCHRIFT

(11) **EP 2 873 837 B1**
(45) Veröffentlichungstag und Bekanntmachung des Hinweises auf die Patenterteilung: **03.05.2017**
(21) Anmeldenummer: 14190222.1
(22) Anmeldetag: 24.10.2014
(51) Int. Cl.: F02C 3/30, F02C 7/06, F01D 25/18, B01D 46/00, B01D 47/06, B01D 51/04

(54) **Strahltriebwerk mit einer Einrichtung zum Einsprühen von Öl**
Jet engine with a device for injecting oil
Moteur à réaction doté d'un dispositif de pulvérisation d'huile

(30) Priorität: 19.11.2013 DE 102013112771
(43) Veröffentlichungstag der Anmeldung: 20.05.2015
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Kronthaler, Wolfgang N.K.

(56) Entgegenhaltungen:
- EP-A1- 2 657 463
- WO-A1-2013/168232
- WO-A1-2015/004394
- US-A1- 2009 133 581
- US-A1- 2009 134 243
- US-A1- 2009 183 950

## Beschreibung

Die Erfindung betrifft ein Strahltriebwerk mit einer Einrichtung zum Einsprühen von Öl gemäß der im Oberbegriff des Patentanspruches 1 näher definierten Art.

Aus der unveröffentlichten DE 10 2013 106 879.0 der Anmelderin ist ein Strahltriebwerk mit wenigstens einem Ölabscheider bekannt, durch den ein Luft-Öl-Volumenstrom aus wenigstens einem mit Öl beaufschlagten Bereich zum Abscheiden von Öl führbar ist. Das Strahltriebwerk ist mit einer Einrichtung zum Einsprühen von Öl in den Luft-Öl-Volumenstrom ausgebildet. Über die Einrichtung wird vorzugsweise ein definierter Ölsprühstrahl direkt in den Luft-Öl-Volumenstrom eingebracht. Beim Aufeinandertreffen von eingesprühten Öltröpfchen auf bereits im Luft-Öl-Volumenstrom vorhandene Öltröpfchen vereinigen sich die eingesprühten Öltropfen und die bereits vorhandenen Öltröpfchen aufgrund ihrer Anziehungskräfte zu gewünscht größeren Tropfen, die im weiteren Strömungsweg des Luft-Öl-Volumenstromes mit geringerem Aufwand als Ölpartikel mit kleinerem Durchmesser aus der Luft mechanisch abscheidbar sind. Die Einrichtung ist mit einer derart konfigurierten Öldüse ausgeführt, dass beim Einsprühen von Öl in den in Richtung des Ölabscheiders strömenden Luft-Öl-Volumenstrom Öltropfen entstehen, die größtenteils größer sind als Öltropfen, die aufgrund ihrer Größe in einem porösen Bereich des Ölabscheiders nicht ausfilterbar sind.

Der vorliegenden Erfindung liegt die Aufgabe zugrunde, ein Strahltriebwerk mit einer konstruktiv einfachen und mit geringem Aufwand in bestehende Triebwerkssysteme implementierbaren Einrichtung zum Einsprühen von Öl zur Verfügung zu stellen.

Erfindungsgemäß wird diese Aufgabe mit einem Strahltriebwerk mit den Merkmalen des Patentanspruches 1 gelöst.

Das erfindungsgemäße Strahltriebwerk ist mit einem einen Strömungsquerschnitt begrenzenden Wandungsbereich und einer Einrichtung zum Einsprühen von Öl in einen in dem Wandungsbereich geführten Luft-Öl-Volumenstrom ausgebildet; der zum Abscheiden von Öl durch einen Ölabscheider führbar ist.

Der Wandungsbereich ist als Leitung ausgeführt und die Einrichtung weist einen Auslassbereich auf, wobei das Öl auf konstruktiv einfache Art und Weise im Bereich der Einrichtung über den fest mit der Leitung verbundenen Auslassbereich in den Luft-Öl-Volumenstrom einsprühbar ist, womit auch bestehende Strahltriebwerkssysteme mit geringem Aufwand mit einer Einrichtung zum Einsprühen von Öl ausführbar sind.

Bei einer konstruktiv besonders einfachen Ausführungsform des erfindungsgemäßen Strahltriebwerkes umfasst der Auslassbereich eine die Leitung im Wesentlichen in radialer Richtung durchgreifende Bohrung.

Ist dem aus dem Auslassbereich in den Luft-Öl-Volumenstrom einsprühbaren Öl im Auslassbereich eine Strömungsrichtung aufprägbar, die mit der Hauptströmungsrichtung des Luft-Öl-Volumenstromes im Bereich der Einrichtung einen spitzen Winkel, d. h. Winkelwerte von 0° bis 90°, und/oder einen stumpfen Winkel, d. h. von 90° bis 180°, einschließt, ist ein Verteilungsgrad des in den Luft-Öl-Volumenstrom eingesprühten Öles auf einfache Art und Weise definiert einstellbar und der Einleitvorgang an eine bevorzugte Strömungsgeschwindigkeit des Luft-Öl-Volumenstromes anpassbar.

Weist die Einrichtung einen Zuführbereich auf, wobei der Auslassbereich mehrere über den vorzugsweise kreisförmig ausgeführten Strömungsquerschnitt verteilt angeordnete und zueinander beabstandete Bohrungen umfasst, die in den Strömungsquerschnitt münden und auf der den Strömungsquerschnitt begrenzenden Seite der Leitung abgewandten Seite mit dem die Leitung umfangsseitig umgreifenden Zuführbereich in Verbindung stehen, ist der Luft-Öl-Volumenstrom mit einer für eine Erhöhung einer Abscheideleistung im Bereich eines stromab angeordneten Ölabscheiders günstigen Verteilung des in den Luft-Öl-Volumenstrom eingesprühten Öles mit geringem Aufwand erzielbar.

Bei einer ebenfalls konstruktiv einfachen Ausführungsform des erfindungsgemäßen Strahltriebwerkes weist der Zuführbereich eine Ringnut auf, wobei die Bohrungen über eine Ringnut des Zuführbereiches miteinander verbunden sind.

Weist die Einrichtung einen Zuführbereich auf, wobei der mit dem Auslassbereich verbundene Zuführbereich wenigstens ein ausgehend von der Leitung in radialer Richtung in den Strömungsquerschnitt des Luft-Öl-Volumenstromes vorkragendes Element aufweist, in dem ein Ölführkanal läuft, ist das Öl in einem zur Wandung beabstandeten Bereich des Strömungsquerschnittes in den Luft-Öl-Volumenstrom mit einem gewünschten Verteilungsgrad einsprühbar.

Weist das Element einen im Wesentlichen in Strömungsrichtung des Luft-Öl-Volumenstromes verlaufenden weiteren Ölführkanal auf, wobei der Ölführkanal des vorkragenden Elementes in den weiteren Ölführkanal des Elementes mündet, über den das Öl aus dem Element in den Luft-Öl-Volumenstrom ausführbar ist, ist das Öl unabhängig von der Strömungsgeschwindigkeit des Luft-Öl-Volumenstromes in und/oder entgegen der Strömungsrichtung des Luft-Öl-Volumenstromes umleitbar, bevor es in den Luft-Öl-Volumenstrom eingesprüht wird. Damit ist ein definierter Einsprühwinkel des Öls in den Luft-Öl-Volumenstrom auf einfache Art und Weise realisierbar und beispielsweise ein wenigstens annähernd kegelförmiger Ölsprühnebel im Luft-Öl-Volumenstrom erzeugbar, mit dem ein hoher Verteilungsgrad des Öls im Luft-Öl-Volumenstrom erzielbar ist.

Zur Einstellung eines gewünschten Verteilungsgrades des Öls im Luft-Öl-Volumenstrom kann im Mündungsbereich des Endes des weiteren Ölführkanales oder im Mündungsbereich beider Enden des weiteren Ölführkanales jeweils eine Düseneinrichtung des Auslassbereiches vorgesehen sein, mittels der oder mittels denen das Öl mit definiertem Tropfendurchmesser in den Luft-Öl-Volumenstrom einleitbar und gegebenenfalls vernebelbar ist.

Umfasst der Auslassbereich mehrere über den vorzugsweise kreisförmig ausgeführten Strömungsquerschnitt angeordnete und in den Strömungsquerschnitt vorkragende Elemente, die auf der zu der den Strömungsquerschnitt begrenzenden Seite der Leitung abgewandten Seite mit einem der Leitung umfangsseitig umgreifenden Zuführbereich in Verbindung stehen, ist das Öl bevorzugterweise in einem radial äußeren Bereich des Strömungsquerschnittes in den Luft-Öl-Volumenstrom im Bereich mehrerer Auslassbereiche einsprühbar und mit hohem Verteilungsgrad in den Luft-Öl-Volumenstrom einbringbar.

Bei einer konstruktiv einfachen und bauraumgünstigen Ausführungsform des Strahltriebwerkes weist der Zuführbereich eine Ringnut auf, wobei die vorkragenden Elemente über eine Ringnut des Zuführbereiches miteinander verbunden sind.

Die Abscheideleistung im Bereich eines Ölabscheiders ist bei einer Weiterbildung des erfindungsgemäßen Strahltriebwerkes dadurch verbesserbar, dass die Einrichtung des Strahltriebwerkes in Strömungsrichtung des Luft-Öl-Volumenstromes mehrere zueinander beabstandete Bereiche zum Einsprühen von Öl aufweist, da Tropfendurchmesser von im Luft-Öl-Volumenstrom mitgeführtem Öl über mehrere in Strömungsrichtung nacheinander folgende Eingabestellen von Öl in gewünschtem Umfang einstellbar bzw. vergrößerbar sind.

Sowohl die in den Patentansprüchen angegebenen Merkmale als auch die in den nachfolgenden Ausführungsbeispielen des erfindungsgemäßen Strahltriebwerkes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Strahltriebwerkes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Strahltriebwerkes mit einer im Bläsergehäuse angeordneten Nebenaggregategetriebeeinrichtung;
- Fig. 1b: eine Fig. 1a entsprechende Darstellung eines Strahltriebwerkes mit im Bereich des Triebwerkskerns montierter Nebenaggregategetriebeeinrichtung;
- Fig. 2: eine stark schematisierte Teildarstellung des Strahltriebwerkes gemäß Fig. 1a bzw. Fig. 1b mit im Bereich der Nebenaggregategetriebeeinrichtung angeordnetem Ölabscheider und zugeordneter Vorkammer, die in einem Gehäuse der Nebenaggregategetriebeeinrichtung vorgesehen ist;
- Fig. 3: eine Fig. 2 entsprechende Darstellung einer von Fig. 2 abweichenden Ausführungsform des Strahltriebwerkes gemäß Fig. 1a bzw. Fig. 1b mit außerhalb eines Gehäuses der Nebenaggregategetriebeeinrichtung angeordneter Vorkammer;
- Fig. 4: eine stark schematisierte Teildarstellung des Strahltriebwerkes gemäß Fig. 1a bzw. Fig. 1b mit stromauf des Ölabscheiders angeordneter Einrichtung zum Einsprühen von Öl in einen LuftÖl-Volumenstrom;
- Fig. 5: eine vergrößerte Darstellung eines in Fig. 4 näher gekennzeichneten Bereiches V;
- Fig. 6: eine detailliertere Querschnittansicht einer ersten Ausführungsform der Einrichtung zum Einsprühen von Öl in einen Luft-Öl-Volumenstrom;
- Fig. 7: eine Längsschnittansicht der Einrichtung zum Einsprühen von Öl gemäß Fig. 4 entlang der Schnittebene VII-VII; und
- Fig. 8: eine Längsschnittansicht einer zweiten Ausführungsform der Einrichtung zum Einsprühen von Öl in einen Luft-Öl-Volumenstrom.

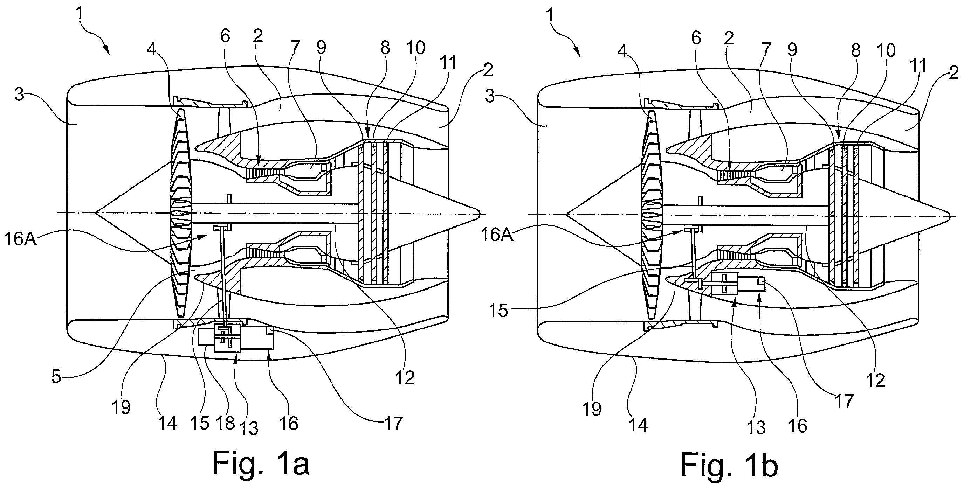

In Fig. 1a und 1b ist jeweils ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerksachse 12 verbunden sind.

Bei der Ausführung des Strahltriebwerks 1 gemäß Fig. 1a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

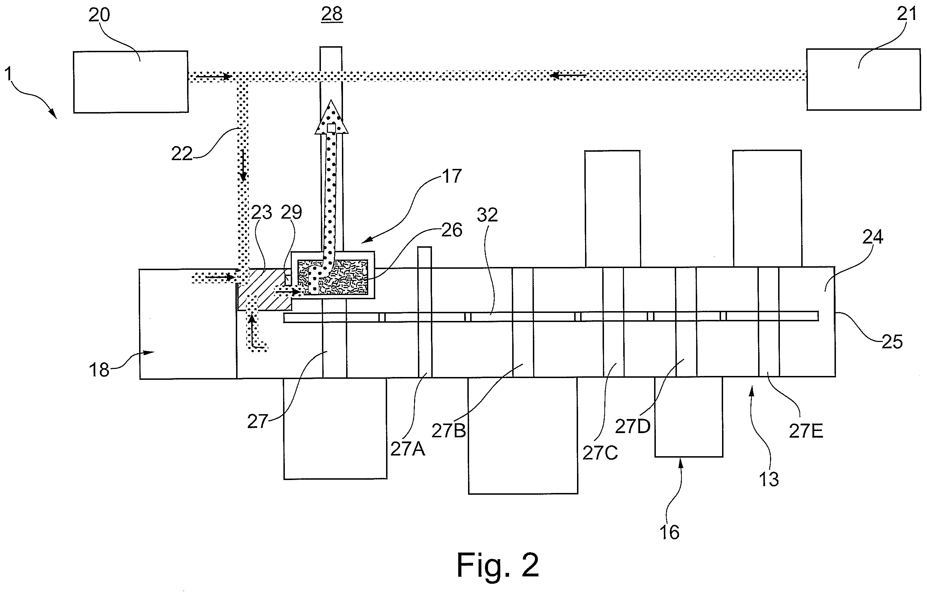

Fig. 2 bis Fig. 4 zeigen drei verschiedene Ausführungsformen des Strahltriebwerks 1 gemäß Fig. 1a in stark schematisierter Form im Bereich der Nebenaggregategetriebeeinrichtung 13, der Nebenaggregate 16 und des Ölabscheiders 17, der vorliegend mit dem Öltank 18 und zwei weiteren Bereichen 20, 21 in Wirkverbindung steht, die vorliegend als Lagerkammern des Strahltriebwerks 1 ausgeführt sind und im Betrieb des Strahltriebwerks 1 mit Öl aus dem Öltank 18 zum Schmieren und Kühlen beaufschlagt werden. Dabei stellt der Bereich 20 die Lagerkammer des vorderen Lagers und der Bereich 21 die Lagerkammer des hinteren Lagers des Strahltriebwerkes 1 dar. Die zu Fig. 2 bis Fig. 4 näher beschriebenen Aspekte weist das Strahltriebwerk 1 gemäß Fig. 1b in im Wesentlichen identischem Umfang auf.

Bei der in Fig. 2 gezeigten Ausführungsform des Strahltriebwerks 1 sind jeweils ein Luft-Öl-Volumenstrom aus der vorderen Lagerkammer 20 und der hinteren Lagerkammer 21 in Richtung eines Leitungsbereiches 22 führbar, der vorliegend in eine dem Ölabscheider 17 vorgeschaltete Vorkammer 23 mündet. Des Weiteren ist auch der Öltank 18 vorliegend mit der Vorkammer 23 verbunden, um einen Luft-Öl-Volumenstrom aus dem Öltank 18 sowie die Luft-Öl-Volumenströme der Lagerkammern 20 und 21 über den Leitungsbereich 22 tangential in die Vorkammer 23 einleiten zu können. Darüber hinaus ist auch ein Innenraum 24 eines Gehäuses 25 der Nebenaggregategetriebeeinrichtung 13 mit der Vorkammer 23 gekoppelt, wobei bei einer entsprechenden Bedruckung des Innenraums 24 ebenfalls ein Luft-Öl-Volumenstrom aus dem Gehäuse 25 der Nebenaggregategetriebeeinrichtung 13 tangential in die Vorkammer 23 eingeleitet wird. Die Vorkammer 23 ist mit dem Ölabscheider 17 verbunden, in dessen Innenraum ein poröser Bereich 26 drehbar angeordnet ist, der von dem aus der Vorkammer 23 ausströmenden Luft-Öl-Volumenstrom durchströmbar ist.

Dabei besteht die Möglichkeit, dass die Vorkammer 23 als ein mit erweitertem Innendurchmesser ausgeführtes Rohr bzw. Rohrstück ausgeführt ist, welches ohnehin die den Luft-Öl-Volumenstrom führende Leitung darstellt.

Der poröse Bereich 26 ist vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstromes soweit als möglich reduzieren zu können. Dabei wird der Ölanteil des Luft-Öl-Volumenstromes im Ölabscheider 17 im Bereich des porösen Bereiches 26 einerseits wie beim Durchströmen eines Prallfilters und andererseits wie im Bereich einer Zentrifuge durch die Rotation des porösen Bereiches 26 durch Abscheiden des Öls aus der Luft reduziert. Das im Bereich des porösen Bereiches 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in den Öltank 18 geführt. Der aus dem Ölabscheider 17 in Richtung der Umgebung 28 ausströmende Luftstrom weist nur eine geringe Beladung an Öl auf. Das Zahnrad 27 ist neben weiteren Zahnrädern 27A bis 27E drehfest mit einer Getriebewelle 32 verbunden und im Innenraum 24 der Nebenaggregategetriebeeinrichtung 13 angeordnet.

Um die Beladung des in Richtung der Umgebung 28 abströmenden Luftvolumenstromes mit Öl möglichst gering einstellen zu können, ist vorliegend im Bereich des Übergangs zwischen der Vorkammer 23 und dem Ölabscheider 17 eine Einrichtung 29 vorgesehen, mittels der Öl in den von der Vorkammer 23 in Richtung des Ölabscheiders 17 strömenden Luft-Öl-Volumenstrom mit definierter Tröpfchengröße eingesprüht wird. Hierfür ist die Einrichtung 29 derart konfiguriert, dass beim Einsprühen von Öl in den in Richtung des Ölabscheiders 17 strömenden Luft-Öl-Volumenstrom Öltropfen entstehen, die größtenteils größer sind als Öltropfen, die aufgrund ihrer geringen Größe im porösen Bereich 26 nicht ausfilterbar sind.

Wiederum stromauf der Einrichtung 29 ist im Bereich der Vorkammer 23 ein Umlenkbereich für die über den Leitungsbereich 22, aus dem Innenraum 24 und aus dem Öltank 18 in die Vorkammer 23 geleiteten Luft-Öl-Volumenströme vorgesehen, in dessen Bereich zumindest ein Teil des Öls aus den Luft-Öl-Volumenströmen der Lagerkammern 20 und 21, des Innenraumes 24 und des Öltanks 18 aufgrund der im Umlenkbereich wirkenden Zentrifugalkraft abgeschieden wird. Damit wird bereits im Umlenkbereich der Vorkammer 23 die Beladung des Luft-Öl-Volumenstromes durch Ausfiltern größerer Tröpfchen reduziert, die eine größere Trägheit als Ölpartikel mit kleineren Durchmessern aufweisen.

Anschließend werden die noch im Luft-Öl-Volumenstrom, der in Richtung des Ölabscheiders 17 aus der Vorkammer 23 ausströmt, vorhandenen kleineren Tröpfchen durch das Einsprühen von Öl über die Einrichtung 29 vergrößert, was durch die jeweils vorliegenden Anziehungskräfte zwischen den einzelnen Öltröpfchen begünstigt wird. Durchströmt der mit Öl angereicherte Luft-Öl-Volumenstrom den Ölabscheider 17 und dessen porösen Bereich 26, der im Betrieb des Strahltriebwerks 1 entsprechend rotiert, wird ein weiterer wesentlicher Anteil des im Luft-Öl-Volumenstrom vorhandenen Öls abgeschleudert und anschließend aus dem Ölabscheider 17 in Richtung des Öltanks 18 abgesaugt. Die durch die Auswaschung des Öls nunmehr vergrößerten Ölpartikel können durch das Einspritzen von Öl von dem Metallschaum 26 im Breather 17 wesentlich effizienter separiert werden, womit Ölverluste des Strahltriebwerks 1 durch verringerte Emissionen in Richtung der Umgebung 28 minimiert sind.

Alternativ zu der vorstehenden Beschreibung besteht auch die Möglichkeit, dass über die Einrichtung 29 stromauf des als Zentrifuge wirkenden Umlenkbereiches der Vorkammer 23, im Bereich der Lagerkammern und/oder im Bereich von Abluftansaugpunkten Öl in einen oder mehrere Luft-Öl-Volumenströme im Strahltriebwerk 1 eingeleitet wird und die sich im Luft-Öl-Volumenstrom stromab der Einrichtung 29 aufgrund der Vereinigung der Öltröpfchen bildenden größeren Tropfen im Umlenkbereich der Vorkammer 23 aufgrund der wirkenden Zentrifugalkraft abgeschieden werden. Anschließend erfolgt der weitere vorbeschriebene Abscheideprozess im rotierenden porösen Bereich 26 des Ölabscheiders 17, bevor die aus dem Ölabscheider 17 ausströmende Luft mit nur geringer Beladung an Öl in Richtung der Umgebung 28 ausströmt.

Bei der Ausführung gemäß Fig. 2 ist die Vorkammer 23 vollständig in das Gehäuse 25 der Nebenaggregategetriebeeinrichtung 13 integriert, während der Ölabscheider 17 zumindest bereichsweise in den Innenraum 24 der Nebenaggregategetriebeeinrichtung 13 eingreift.

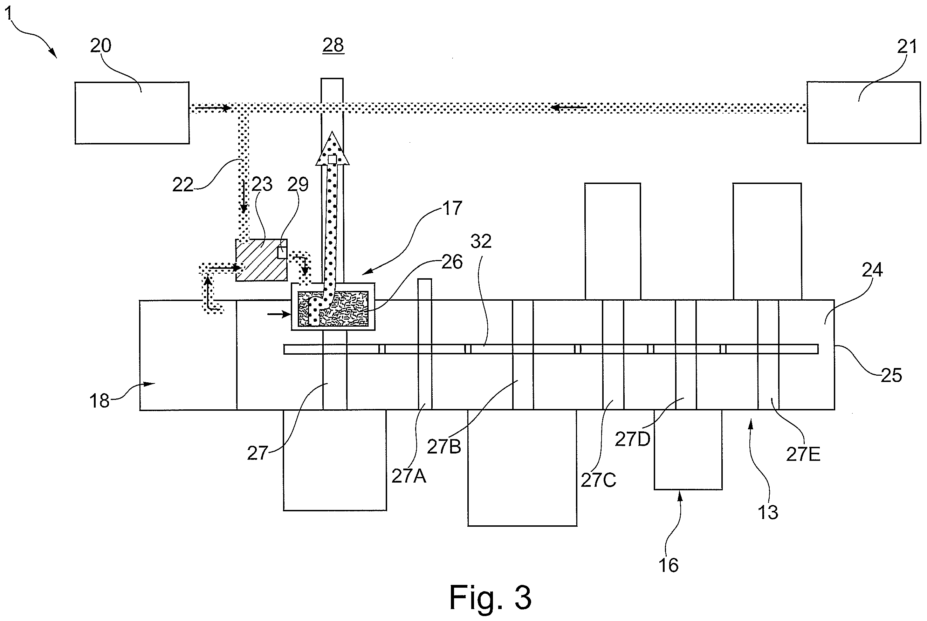

Im Unterschied hierzu ist die Vorkammer 23 bei der Ausführung des Strahltriebwerks 1 gemäß Fig. 3 vollständig außerhalb des Gehäuses der Nebenaggregategetriebeeinrichtung 13 angeordnet, während der Ölabscheider 17 im gleichen Umfang wie bei der Ausführung des Strahltriebwerks 1 gemäß Fig. 2 bereichsweise im Gehäuse 25 angeordnet ist. Wie bei der Ausführung des Strahltriebwerks 1 gemäß Fig. 2 werden auch bei dem Strahltriebwerk 1 gemäß Fig. 3 die Luft-Öl-Volumenströme aus den Lagerkammern 20 und 21, dem Öltank 18 und dem Innenraum 24 der Nebenaggregategetriebeeinrichtung 13 zunächst tangential in die Vorkammer 23 eingeleitet und über den Umlenkbereich in Richtung der Einrichtung 29 weitergeführt, in deren Bereich wiederum Öl in den gesammelten Luft-Öl-Volumenstrom eingesprüht wird. Anschließend wird der mit Öl angereicherte Luft-Öl-Volumenstrom in den Ölabscheider 17 eingeleitet und durchströmt dort den porösen Bereich 26.

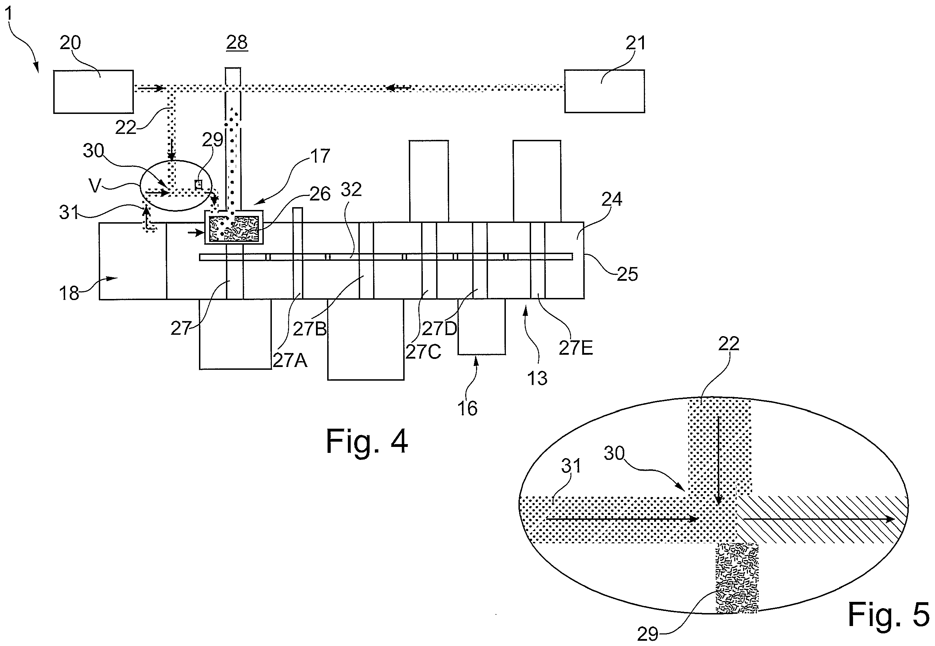

Die Ausführung des Strahltriebwerks 1 gemäß Fig. 4 ist im Unterschied hierzu ohne die Vorkammer 23 ausgeführt und kann unter anderem Anwendung finden für ein Strahltriebwerk, dessen Öltank nicht in die Nebenaggregategetriebeeinrichtung 13 integriert ist und vorzugsweise in einem zu der Nebenaggregategetriebeeinrichtung 13 beabstandeten Bauraum innerhalb des Strahltriebwerks angeordnet ist. Die im Bereich der Lagerkammern 20 und 21 sowie im Bereich des Öltanks 18 mit Öl angereicherten Luft-Öl-Volumenströme werden stromab eines Leitungsbereichsknotens 30, in dessen Bereich der Leitungsbereich 22 und ein weiterer mit dem Öltank 18 verbundener Leitungsbereich 31 münden, in den Umlenkbereich eingeleitet, in dessen Bereich ein Teil des Öls aus dem vereinten Luft-Öl-Volumenstrom abgeschieden wird. Wiederum stromab der Umlenkeinrichtung wird wie in Fig. 5 stark schematisiert dargestellt, über die Einrichtung 29 Öl in den vom Leitungsbereichsknoten 30 abströmenden Luft-Öl-Volumenstrom eingesprüht. Der gewaschene Luft-Öl-Volumenstrom strömt mit größeren Öltropfen in den Ölabscheider 17 ein, in dem das Öl in der vorbeschriebenen Art und Weise im Bereich des rotierenden porösen Bereiches 26 abgeschieden wird. Zusätzlich wird der Luft-Öl-Volumenstrom aus dem Innenraum 24 der Nebenaggregategetriebeeinrichtung 13 direkt in den Ölabscheider 17 tangential eingeleitet, um auch die aus dem bedruckten Gehäuse 25 ausströmende und mit Öl beladene Verbrauchsluft im Bereich des Ölabscheiders 17 in gewünschtem Umfang zu reinigen.

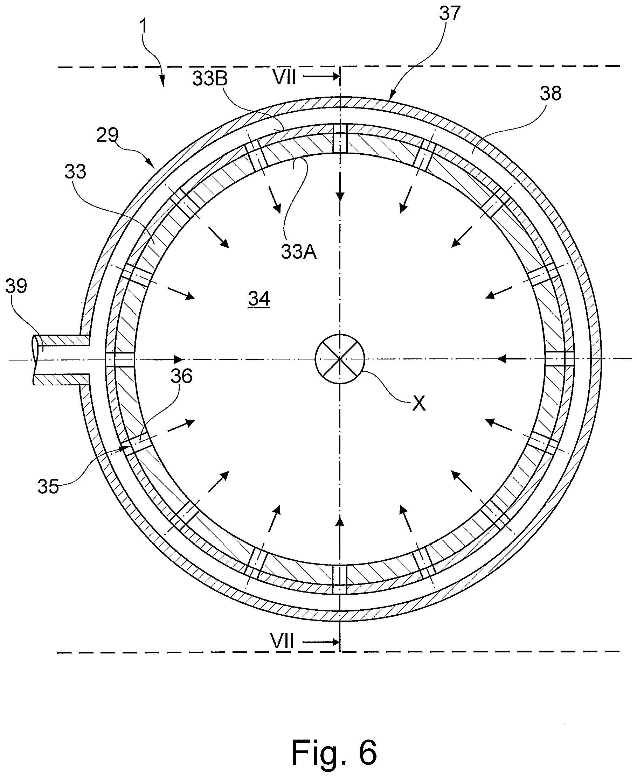

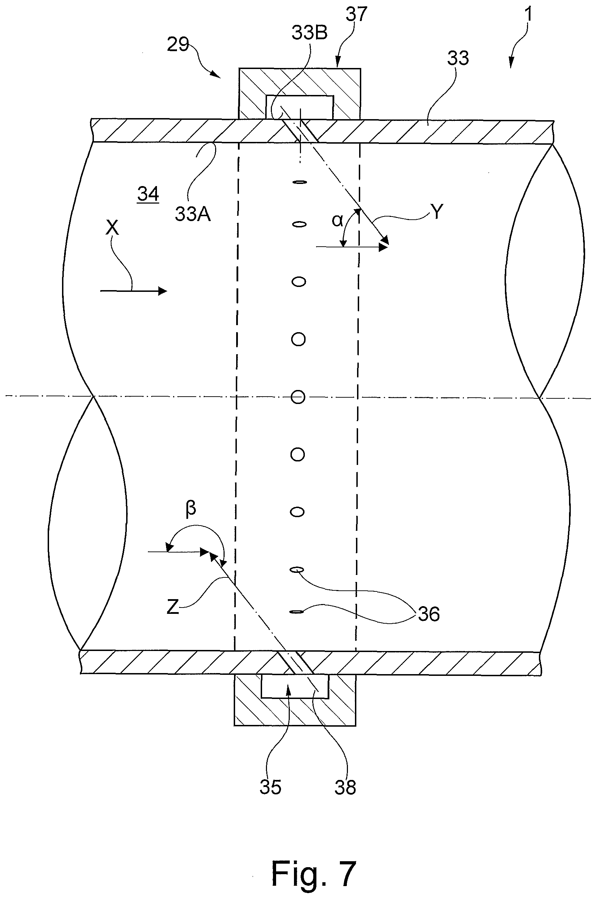

Fig. 6 zeigt eine Querschnittansicht einer ersten Ausführungsform der Einrichtung 29 zum Einsprühen von Öl in den in einem von einem Wandungsbereich 33 begrenzten Strömungsquerschnitt 34 geführten Luft-Öl-Volumenstrom der Lagerkammern 20 und 21, des Öltanks 18 und vorzugsweise auch eines Luft-Öl-Volumenstromes aus dem Innenraum 24 der Nebenaggregategetriebeeinrichtung 13. Die Einrichtung 29 gemäß Fig. 6 ist mit einem Auslassbereich 35 ausgeführt, der mehrere den Wandungsbereich 33 im Wesentlichen in radialer Richtung durchgreifende Bohrungen 36 umfasst. Die Bohrungen 36 sind in Umfangsrichtung des vorliegend kreisförmig ausgeführten Strömungsquerschnittes 34 zueinander beabstandet und im Wesentlichen gleichmäßig verteilt angeordnet und münden in den Strömungsquerschnitt 34. Auf der zu der den Strömungsquerschnitt 34 begrenzenden Seite 33A des Wandungsbereiches 33 abgewandten Seite 33B stehen die Bohrungen 36 mit einem den Wandungsbereich 33 umfangsseitig umgreifenden Zuführbereich 37 in Verbindung, wobei die Bohrungen über eine in Fig. 7 im Querschnitt dargestellte Ringnut 38 des Zuführbereiches 37 miteinander verbunden sind und über eine zentrale Zuführleitung 39 mit Öl beaufschlagbar sind.

Alternativ zu der im Wesentlichen radialen Ausrichtung der Bohrungen 36 im Wandungsbereich 33 kann es auch vorgesehen sein, dass die Bohrungen 36, wie in Fig. 7 dargestellt, jeweils schräg durch den Wandungsbereich 33 verlaufend die Ringnut 38 mit dem Strömungsquerschnitt 34 verbinden. Durch den in Bezug auf eine Strömungsrichtung X des Luft-Öl-Volumenstromes angestellten Verlauf der Bohrungen 36 im Wandungsbereich 33 besteht auf einfache Art und Weise die Möglichkeit, dem aus dem Auslassbereich 35 in den Luft-Öl-Volumenstrom einsprühbaren Öl im Auslassbereich 35 eine Strömungsrichtung Y oder Z aufzuprägen, die mit der Hauptströmungsrichtung X des Luft-Öl-Volumenstromes im Bereich der Einrichtung 29 einen spitzen Winkel α oder einen stumpfen Winkel β einschließt. Vorliegend kann der Winkel α in Abhängigkeit des jeweils vorliegenden Anwendungsfalles Winkelwerte von 0° bis 90° und der Winkel β Winkelwerte von 90° bis 180° aufweisen.

Die Auswahl der im Bereich des Auslassbereiches 35 dem Öl aufgeprägten Strömungsrichtung, die bei im Wesentlichen radialem Verlauf der Bohrungen 36 im Wandungsbereich 33 im Wesentlichen senkrecht zur Hauptströmungsrichtung X des Luft-Öl-Volumenstromes ist, erfolgt in Abhängigkeit des jeweils vorliegenden Anwendungsfalles, um einen möglichst guten Verteilungsgrad des Öls im Luft-Öl-Volumenstrom stromab der Einrichtung 29 zu erreichen.

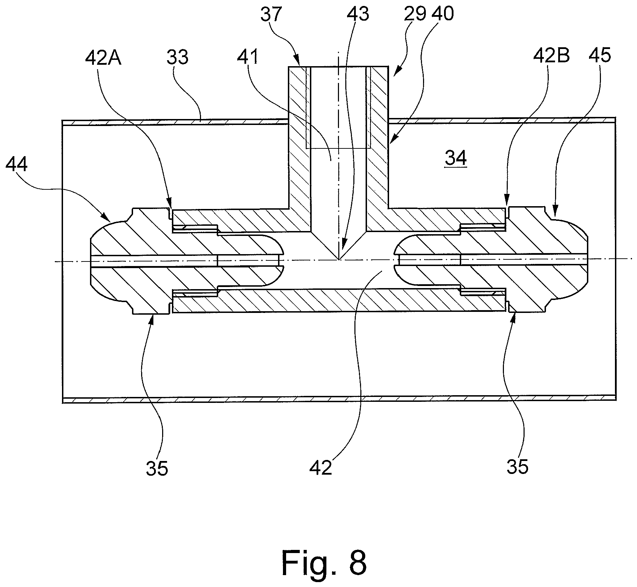

Eine Längsschnittansicht eines zweiten Ausführungsbeispieles der Einrichtung 29 zeigt Fig. 8, bei der ein mit dem Auslassbereich verbundener Zuführbereich 37 ein ausgehend vom Wandungsbereich 33 in radialer Richtung in den Strömungsquerschnitt 34 des Luft-Öl-Volumenstromes vorkragendes Element 40 aufweist, in dem ein Ölführkanal 41 verläuft.

Der Ölführkanal 41 des vorkragenden Elementes 40 mündet in einen im Wesentlichen in Strömungsrichtung X des Luft-Öl-Volumenstromes verlaufenden weiteren Ölführkanal 42 des Elementes 40, über den Öl aus dem den Auslassbereich 35 aufweisenden Element 40 in den Luft-Öl-Volumenstrom ausführbar ist. Der weitere Ölführkanal 42 erstreckt sich ausgehend vom Mündungsbereich des Ölführkanales 41 entgegen der Strömungsrichtung X und in Strömungsrichtung X des Luft-Öl-Volumenstromes im vorkragenden Element 40. Zusätzlich bildet der weitere Ölführkanal 42 im Bereich beider Enden 42A und 42B den Auslassbereich 35 und mündet dort in den Strömungsquerschnitt 34 des Luft-Öl-Volumenstromes.

Im Mündungsbereich beider Enden 42A und 42B des weiteren Ölführkanales 42 ist jeweils eine Düseneinrichtung 44, 45 des Auslassbereiches 35 vorgesehen, mittels denen das zuzuführende Öl in dem für eine hohe Abscheideleistung im Bereich des Ölabscheiders 17 erforderlichen Umfang mit definierter Tropfengröße, vorzugsweise als Ölnebel, in den Luft-Öl-Volumenstrom einleitbar ist.

Alternativ hierzu besteht auch die Möglichkeit, dass sich der weitere Ölführkanal 42 in nicht näher dargestellter Art und Weise ausgehend vom Mündungsbereich 43 des Ölführkanales 41 lediglich in Strömungsrichtung X oder entgegen der Strömungsrichtung X des Luft-Öl-Volumenstromes im Strömungsquerschnitt 34 des Luft-Öl-Volumenstromes erstreckt und Öl lediglich im Bereich des Endes 42B oder lediglich im Bereich des Endes 42A aus dem weiteren Ölführkanal 42 in den Luft-Öl-Volumenstrom einleitbar ist. Bei einer solchen Ausführung ist der weitere Ölführkanal 42 ohne das Ende 42A oder ohne das Ende 42B ausgebildet oder das Ende 42A oder das Ende 42B ist über einen Blindstopfen oder dergleichen verschlossen.

Wiederum in Abhängigkeit des jeweils vorliegenden Anwendungsfalles ist die Einrichtung 29 des Strahltriebwerkes 1 mit lediglich einem Bereich gemäß Fig. 6 und/oder gemäß Fig. 8 oder mit mehreren in Strömungsrichtung X des Luft-Öl-Volumenstromes zueinander beabstandeten Bereichen gemäß Fig. 6 und/oder gemäß Fig. 8 zum Einsprühen von Öl in einen oder in mehrere Luft-Öl-Volumenströme ausgeführt, um im Bereich des Ölabscheiders 17 eine gewünscht hohe Abscheideleistung zu erreichen.

Zusätzlich kann es auch vorgesehen sein, dass der Zuführbereich 37 der Einrichtung 29 gemäß Fig. 8 mehrere über den vorzugsweise kreisförmig ausgeführten Strömungsquerschnitt 34 des Luft-Öl-Volumenstromes angeordnete und in den Strömungsquerschnitt 34 vorkragende Elemente 40 umfasst, die auf der zu der den Strömungsquerschnitt begrenzenden Seite 33A des Wandungsbereiches 33 abgewandten Seite 33B mit einem den Wandungsbereich 33 umfangsseitig umgreifenden Bereich des Zuführbereiches 37, beispielsweise in der zu Fig. 6 und Fig. 7 beschriebenen Art und Weise in Verbindung stehen und ausgehend von diesem mit Öl versorgt werden.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Öltank
- 19: Bauteil
- 20: Bereich, vordere Lagerkammer
- 21: Bereich, hintere Lagerkammer
- 22: Leitungsbereich
- 23: Vorkammer
- 24: Innenraum
- 25: Gehäuse
- 26: poröser Bereich
- 27: Zahnrad
- 27A bis 27E: Zahnrad
- 28: Umgebung
- 29: Einrichtung
- 30: Leitungsbereichsknoten
- 31: weiterer Leitungsbereich
- 32: Getriebewelle
- 33: Wandungsbereich
- 33A, 33B: Seite des Wandungsbereiches
- 34: Strömungsquerschnitt
- 35: Auslassbereich
- 36: Bohrung
- 37: Zuführbereich
- 38: Ringnut
- 39: zentrale Zuführleitung
- 40: Element
- 41: Ölführkanal
- 42: weiterer Ölführkanal
- 42A, 42B: Ende des weiteren Ölführkanals
- 43: Mündungsbereich des Ölführkanals
- 44, 45: Düseneinrichtung
- X: Hauptströmungsrichtung des Luft-Öl-Volumenstromes
- Y, Z: dem Öl aufprägbare Strömungsrichtung
- α: spitzer Winkel
- β: stumpfer Winkel

## Patentansprüche

1. Strahltriebwerk (1) mit einem einen Strömungsquerschnitt (34) begrenzenden Wandungsbereich (33), welcher im Betrieb einen Luft-Öl-Volumenstrom führt, und einer Einrichtung (29) zum Einsprühen von Öl in den von dem Wandungsbereich (33) geführten Luft-Öl-Volumenstrom, der zum Abscheiden von Öl durch einen Ölabscheider (17) führbar ist, **dadurch gekennzeichnet, dass** der Wandungsbereich (33) als Leitung ausgeführt ist und die Einrichtung (29) einen Auslassbereich (35) aufweist, wobei das Öl im Bereich der Einrichtung (29) über den fest mit der Leitung (33) verbundenen Auslassbereich (35) in den Luft-Öl-Volumenstrom einsprühbar ist.

2. Strahltriebwerk nach Anspruch 1, **dadurch gekennzeichnet, dass** der Auslassbereich (35) eine die Leitung (33) im Wesentlichen in radialer Richtung durchgreifende Bohrung (36) umfasst.

3. Strahltriebwerk nach Anspruch 1 oder 2, **dadurch gekennzeichnet, dass** dem aus dem Auslassbereich (35) in den Luft-Öl-Volumenstrom einsprühbaren Öl im Auslassbereich (35) eine Strömungsrichtung (4, 7) aufprägbar ist, die mit der Hauptströmungsrichtung (X) des Luft-Öl-Volumenstromes im Bereich der Einrichtung (29) einen spitzen Winkel (α) und/oder einen stumpfen Winkel (β) einschließt.

4. Strahltriebwerk nach Anspruch 2 oder 3, **dadurch gekennzeichnet, dass** die Einrichtung (29) einen Zuführbereich (37) aufweist, wobei der Auslassbereich (35) mehrere über den vorzugsweise kreisförmig ausgeführten Strömungsquerschnitt verteilt angeordnete Bohrungen (36) umfasst, die in den Strömungsquerschnitt (34) münden und auf der zu der den Strömungsquerschnitt (34) begrenzenden Seite (33A) der Leitung (33) abgewandten Seite (33B) mit dem die Leitung (33) umfangsseitig umgreifenden Zuführbereich (37) in Verbindung stehen.

5. Strahltriebwerk nach Anspruch 4, **dadurch gekennzeichnet, dass** der Zuführbereich (37) eine Ringnut (38) aufweist, wobei die Bohrungen (36) über die Ringnut (38) des Zuführbereiches (37) miteinander verbunden sind.

6. Strahltriebwerk nach Anspruch 1, **dadurch gekennzeichnet, dass** die Einrichtung (29) einen Zuführbereich (37) aufweist, wobei der mit dem Auslassbereich (35) verbundene Zuführbereich (37) wenigstens ein ausgehend von der Leitung (33) in radialer Richtung in den Strömungsquerschnitt (34) des Luft-Öl-Volumenstromes vorkragendes Element (40) aufweist, in dem ein Ölführkanal (41) verläuft.

7. Strahltriebwerk nach Anspruch 6, **dadurch gekennzeichnet, dass** das Element (40) einen im Wesentlichen in Strömungsrichtung des Luft-Öl-Volumenstromes verlaufenden weiteren Ölführkanal (42) aufweist, wobei der Ölführkanal (41) des vorkragenden Elementes (40) in den weiteren Ölführkanal (42) des Elementes (40) mündet, über den das Öl aus dem den Auslassbereich (35) aufweisenden Element (40) in den Luft-Öl-Volumenstrom ausführbar ist.

8. Strahltriebwerk nach Anspruch 7, **dadurch gekennzeichnet, dass** sich der weitere Ölführkanal (42) ausgehend vom Mündungsbereich (43) des Ölführkanals (41) entgegen der Strömungsrichtung (X) und/oder in Strömungsrichtung (X) des Luft-Öl-Volumenstromes im vorkragenden Element (40) erstreckt und im Bereich von einem Ende oder im Bereich beider Enden (42A, 42B) den Auslassbereich (35) bildet und dort in den Strömungsquerschnitt des Luft-Öl-Volumenstromes mündet.

9. Strahltriebwerk nach Anspruch 8, **dadurch gekennzeichnet, dass** im Mündungsbereich des Endes des weiteren Ölführkanales oder im Mündungsbereich beider Enden (42A, 42B) des weiteren Ölführkanales (42) jeweils eine Düseneinrichtung (44, 45) des Auslassbereiches (35) vorgesehen ist, mittels der oder mittels denen das zuzuführende Öl vorzugsweise vernebelbar ist.

10. Strahltriebwerk nach einem der Ansprüche 6 bis 9, **dadurch gekennzeichnet, dass** der Zuführbereich (37) mehrere über den vorzugsweise kreisförmig ausgeführten Strömungsquerschnitt (34) angeordnete und in den Strömungsquerschnitt (34) vorkragende Elemente (40) umfasst, die auf der zu der den Strömungsquerschnitt (34) begrenzenden Seite (33A) der Leitung (33) abgewandten Seite (33B) mit einem die Leitung (33) umfangsseitig umgreifenden Bereich des Zuführbereiches (37) in Verbindung stehen.

11. Strahltriebwerk nach Anspruch 10, **dadurch gekennzeichnet, dass** der Zuführbereich (37) eine Ringnut (38) aufweist, wobei die vorkragenden Elemente (40) über die Ringnut (38) des Zuführbereiches (37) miteinander verbunden sind.

12. Strahltriebwerk nach einem der Ansprüche 1 bis 11, **dadurch gekennzeichnet, dass** die Einrichtung (29) in Strömungsrichtung (X) des Luft-Öl-Volumenstromes mehrere zueinander beabstandete Bereiche zum Einsprühen von Öl aufweist.

## Claims

1. Jet engine (1) with a wall area (33) limiting a flow cross-section (34), said wall area guiding an air-oil volume flow during operation, and with a device (29) for spraying oil into the air-oil volume flow guided by the wall area (33), said air-oil volume flow being guidable through an oil separator (17) in order to separate oil, **characterized in that** the wall area (33) is designed as a line and that the device (29) has an outlet area (35), where the oil can be sprayed into the air-oil volume flow in the area of the device (29) via the outlet area (35) rigidly connected to the line (33).

2. Jet engine in accordance with Claim 1, **characterized in that** the outlet area (35) includes a hole (36) passing through the line (33) substantially in the radial direction.

3. Jet engine in accordance with Claim 1 or 2, **characterized in that** the oil sprayable out of the outlet area (35) into the air-oil volume flow can be imparted with a flow direction (Y, Z) in the outlet area (35), said flow direction forming an acute angle (α) and/ or an obtuse angle (β) with the main flow direction (X) of the air-oil volume flow in the area of the device (29).

4. Jet engine in accordance with Claim 2 or 3, **characterized in that** the device (29) is provided with a feed area (37), where the outlet area (35) includes several holes (36) arranged spread over the preferably circular-designed flow cross-section, said holes (36) issuing into the flow cross-section (34) and being connected, on the side (33B) facing away from that side (33A) of the line (33) limiting the flow cross-section (34), to the feed area (37) encompassing the line (33) on the circumferential side.

5. Jet engine in accordance with Claim 4, **characterized in that** the feed area (37) has an annular groove (38), where the holes (36) are connected to one another via the annular groove (38) of the feed area (37).

6. Jet engine in accordance with Claim 1, **characterized in that** the device (29) is provided with a feed area (37), where said feed area (37) which is connected to the outlet area (35) has at least one element (40) projecting in the radial direction from the line (33) into the flow cross-section (34) of the air-oil volume flow and containing an oil guide duct (41).

7. Jet engine in accordance with Claim 6, **characterized in that** the element (40) is provided with a further oil guide duct (42) running substantially in the flow direction of the air-oil volume flow, where the oil guide duct (41) of the projecting element (40) issues into the further oil guide duct (42) of the element (40), via which the oil can be guided out of the element (40) having the outlet area (35) into the air-oil volume flow.

8. Jet engine in accordance with Claim 7, **characterized in that** the further oil guide duct (42) extends from the opening area (43) of the oil guide duct (41) against the flow direction (X), and/ or in the flow direction (X) of the air-oil volume flow in the projecting element (40) and forms the outlet area (35) in the area of one end or in the area of both ends (42A, 42B) and issues there into the flow cross-section of the air-oil volume flow.

9. Jet engine in accordance with Claim 8, **characterized in that** in the opening area of the end of the further oil guide duct or in the opening area of both ends (42A, 42B) of the further oil guide duct (42), a nozzle device (44, 45) of the outlet area (35) is provided in each case, by means of which the oil to be supplied can be preferably turned into mist.

10. Jet engine in accordance with one of the Claims 6 to 9, **characterized in that** the feed area (37) includes several elements (40) arranged over the preferably circular-designed flow cross-section (34) and projecting into the flow cross-section (34) which are connected, on the side (33B) facing away from that side (33A) of the line (33) limiting the flow cross-section (34), to a zone of the feed area (37) encompassing the line (33) on the circumferential side.

11. Jet engine in accordance with Claim 10, **characterized in that** the feed area (37) is provided with an annular groove (38), where the projecting elements (40) are connected to one another via the annular groove (38) of the feed area (37).

12. Jet engine in accordance with one of the Claims 1 to 11, **characterized in that** the device (29) has in the flow direction (X) of the air-oil volume flow several areas for spraying in oil at a distance from one another.

## Revendications

1. Réacteur (1) avec une zone de paroi (33) délimitant une section d'écoulement (34), laquelle zone conduit en service un flux volumétrique d'air-huile, et avec un dispositif (29) pour pulvériser de l'huile dans le flux volumétrique d'air-huile conduit par la zone de paroi (33), lequel flux peut être conduit à travers un déshuileur (17) afin de séparer de l'huile, **caractérisé en ce que** la zone de paroi (33) se présente sous la forme d'une conduite et que le dispositif (29) possède une zone d'échappement (35) sachant que l'huile peut être pulvérisée dans le flux volumétrique d'air-huile, au niveau du dispositif (29) moyennant la zone d'échappement (35) fixée à la conduite (33).

2. Réacteur selon la revendication n° 1, **caractérisé en ce que** la zone d'échappement (35) comprend un alésage (36) perçant la conduite (33) essentiellement dans le sens radial.

3. Réacteur selon la revendication n° 1 ou n° 2, **caractérisé en ce qu'**un sens d'écoulement (Y, Z) peut être donné, dans la zone d'échappement (35), à l'huile pulvérisablè dans le flux volumétrique d'air-huile à partir de la zone d'échappement (35), lequel sens d'écoulement forme, au niveau du dispositif (29), un angle aigu (α) et/ ou un angle obtus (β) par rapport au sens principal d'écoulement (X) du flux volumétrique d'air-huile.

4. Réacteur selon la revendication n° 2 ou n° 3, **caractérisé en ce que** le dispositif (29) présente une zone d'alimentation (37), la zone d'échappement (35) comprenant plusieurs alésages (36) répartis sur la section d'écoulement ayant de préférence une forme circulaire, lesquels alésages (36) débouchent dans la section d'écoulement (34) et sont reliés, sur le côté opposé (33B) au côté (33A) de la conduite (33) délimitant la section d'écoulement (34), à la zone d'alimentation (37) enveloppant la conduite (33) à sa périphérie.

5. Réacteur selon la revendication n° 4, **caractérisé en ce que** la zone d'alimentation (37) présente une rainure annulaire (38), les alésages (36) étant reliés les uns aux autres moyennant la rainure annulaire (38) de la zone d'alimentation (37).

6. Réacteur selon la revendication n° 1, **caractérisé en ce que** le dispositif (29) présente une zone d'alimentation (37) sachant que ladite zone d'alimentation (37), qui est reliée à la zone d'échappement (35), présente au moins un élément saillant (40), partant de la conduite (33) et pénétrant dans le sens radial dans la section d'écoulement (34) du flux volumétrique d'air-huile et contenant un canal de guidage d'huile (41).

7. Réacteur selon la revendication n° 6, **caractérisé en ce que** l'élément (40) présente un autre canal de guidage d'huile (42) suivant essentiellement le sens d'écoulement du flux volumétrique d'air-huile, sachant que le canal de guidage d'huile (41) de l'élément saillant (40) débouche dans l'autre canal de guidage d'huile (42) de l'élément (40) par le biais duquel canal l'huile provenant de l'élément (40) présentant la zone d'échappement (35) peut être conduite dans le flux volumétrique d'air-huile.

8. Réacteur selon la revendication n° 7, **caractérisé en ce que** l'autre canal de guidage d'huile (42) s'étend dans l'élément saillant (40), partant de la zone d'embouchure (43) du canal de guidage d'huile (41) et suivant le sens opposé au sens d'écoulement (X) et/ ou le sens d'écoulement (X) du flux volumétrique d'air-huile, et forme la zone d'échappement (35) au niveau d'une extrémité ou au niveau des deux extrémités (42A, 42B) et y débouche dans la section d'écoulement du flux volumétrique d'air-huile.

9. Réacteur selon la revendication n° 8, **caractérisé en ce que** dans la zone d'embouchure de l'extrémité de l'autre canal de guidage d'huile ou dans la zone d'embouchure des deux extrémités (42A, 42B) de l'autre canal de guidage d'huile (42), est prévu, pour chaque, un dispositif à buse (44, 45) de la zone d'échappement (35) au moyen duquel l'huile à alimenter peut être de préférence atomisée.

10. Réacteur selon une des revendications n° 6 à n° 9, **caractérisé en ce que** la zone d'alimentation (37) comprend plusieurs éléments saillants (40) qui sont disposés sur la section d'écoulement (34) ayant de préférence une forme circulaire, lesquels éléments pénètrent dans la section d'écoulement (34) et sont reliés, sur le côté opposé (33B) au côté (33A) de la conduite (33) délimitant la section d'écoulement (34), à une région de la zone d'alimentation (37) enveloppant la conduite (33) à sa périphérie.

11. Réacteur selon la revendication n° 10, **caractérisé en ce que** la zone d'alimentation (37) présente une rainure annulaire (38), les éléments saillants (40) étant reliés les uns aux autres moyennant la rainure annulaire (38) de la zone d'alimentation (37).

12. Réacteur selon une des revendications n° 1 à n° 11, **caractérisé en ce que** le dispositif (29) présente dans le sens d'écoulement (X) du flux volumétrique d'air-huile plusieurs zones espacées les unes des autres et servant à pulvériser de l'huile.
